# EUROPÄISCHE PATENTSCHRIFT

(11) **EP 0 621 885 B1**
(45) Veröffentlichungstag und Bekanntmachung des Hinweises auf die Patenterteilung: **17.04.1996**
(21) Anmeldenummer: 93902219.0
(22) Anmeldetag: 15.01.1993
(51) Int. Cl.: C08J 11/06, C08J 11/14, B29B 17/00

(54) **VERFAHREN ZUM AUFARBEITEN VON KUNSTSTOFFABFÄLLEN**
METHOD OF PROCESSING PLASTIC WASTE
PROCEDE POUR LE RETRAITEMENT DE DECHETS EN MATIERE PLASTIQUE

(30) Priorität: 16.01.1992 DE 4200915
(43) Veröffentlichungstag der Anmeldung: 02.11.1994
(73) Patentinhaber: SICOWA Verfahrenstechnik für Baustoffe GmbH & Co. KG, D-52072 Aachen (DE)
(72) Erfinder: KOSLOWSKI, Thomas, D-5100 Aachen (DE); SCHMITZ, Wolfgang, D-5130 Geilenkirchen (DE); MUSEBRINK, Olaf, D-52531 Uebach-Palenberg (DE)
(74) Vertreter: Sparing - Röhl - Henseler Patentanwälte
(86) Internationale Anmeldenummer: EP9300095
(87) Internationale Veröffentlichungsnummer: WO9314154

(56) Entgegenhaltungen:
- US-A- 1 998 432
- US-A- 2 364 387
- US-A- 3 859 404
- US-A- 5 124 125
- DATABASE WPI Derwent Publications Ltd., London, GB; AN 7846543A(26)
- DATABASE WPI Derwent Publications Ltd., London, GB; AN 72-74082T(46)
- PATENT ABSTRACTS OF JAPAN vol. 12, no. 247(M-717) 13 July 1988

## Beschreibung

Die Erfindung betrifft ein Verfahren zum Aufarbeiten von Kunststoffabfällen, bei dem die in einen Behälter gefüllten Kunststoffabfälle mit Wasserdampf zum Schmelzen der Kunststoffabfälle behandelt werden.

Nicht sortenreine Kunststoffe aus Siedlungs- und/oder Industrieabfällen bieten hinsichtlich einer eventuellen Wiederverwertung einerseits durch die fehlende Sortenreinheit und andererseits durch das notwendige Waschen zur Beseitigung von Verunreinigungen erhebliche Schwierigkeiten, zumal auch nach dem Waschen noch Reste von Verunreinigungen wie Sand, nicht aus Kunststoff bestehende Folienstücke, Holzstükke u.dgl. zusammen mit einer entsprechenden Restfeuchtigkeit vorhanden sind.

Zwar ist es bekannt, aus derartigen Kunststoffabfällen Blumenschalen, Begrenzungspfähle u.dgl. unter Wärmeeinwirkung zu pressen, jedoch sind diese Produkte einerseits relativ minderwertig und andererseits erfolgt hierdurch keine bedeutende Wertschöpfung, sondern im wesentlichen nur eine Abfallbeseitigung, die im übrigen nicht zur Verarbeitung von großen Mengen von Abfällen führt.

Um große Mengen an derartigen oder auch an sortenreinen Kunststoffabfällen etwa zu weiterverwendbaren Zwischenprodukten verarbeiten zu können, eignen sich auch keine in der Kunststoffindustrie üblichen, für sortenreine Kunststoffe eingesetzte Granulierverfahren. So wäre eine Herstellung grobkörniger Zwischenprodukte etwa mittels eines beheizten Extruders wegen der geringen erzielbaren Leistung erstens unwirtschaftlich und zweitens in bezug auf die anfallenden Mengen ungeeignet. Schwierigkeiten bereitet hierbei u.a. die schlechte Wärmeleitfähigkeit der Kunststoffabfälle, die das Erwärmen und das Abkühlen beeinträchtigt.

Aus der DE-OS 22 29 535 ist ein Verfahren bekannt, mit dem formgepreßte Formkörper hergestellt werden, indem lose in einen Behälter gefüllte Kunststoffabfälle zunächst durch Hindurchsaugen von Wasserdampf und gegebenenfalls von Lösungsmitteldampf erweicht werden, um dann zu Formkörpern heiß verpreßt zu werden. Um die Ausbildung von Lunkern zu verhindern, die die Qualität der Formkörper beeinträchtigen könnten, ist der Wasserdampf vor dem Formpressen gänzlich etwa durch Heißlufttrocknung zu entfernen. Die schlechte Wärmeleitfähigkeit von Kunststoff beeinträchtigt das Aufheizen und Trocknen und verursacht ein langsames Abkühlen des gepreßten Formkörpers. Dies erfordert somit einen relativ großen Zeitaufwand, der zusätzlich zur losen Schüttung der Kunststoffabfälle einen großen Mengendurchsatz verhindert.

Aufgabe der Erfindung ist es, ein Verfahren der eingangs genannten Art zu schaffen, das es ermöglicht, Kunststoffabfälle wirtschaftlich in großen Mengen zu einem zur Weiterverwendung geeigneten Produkt zu verarbeiten.

Diese Aufgabe wird dadurch gelöst, daß die in den Behälter gefüllten Kunststoffabfälle als zusammenhaltende, poröse Gebinde mit hohem Wasseraufnahmevermögen in Wasserdampfatmosphäre bei etwa 150 bis 220°C, vorzugsweise 165 bis 190°C, autoklaviert und hierdurch miteinander verschmolzen, am Ende des Autoklaviervorgangs die entstandenen Körper aus verschmolzenem Kunststoff durch Rückverdampfung des darin enthaltenen Wassers zumindest teilweise getrocknet und abgekühlt werden.

Diese Verfahren ist insbesondere für nicht sortenreine Kunststoffe, wie sie vor allem aus Siedlungsabfällen anfallen, aber auch für sortenreine Kunststoffe geeignet. Außerdem können neben schmelzbaren Thermoplasten auch Duroplaste, die nicht schmelzen, sondern sich bei entsprechend hoher Temperatur nur zersetzen, bis zu einer Menge kleiner etwa 50 Gew.-% toleriert werden.

Gewöhnlich ist eine Waschanlage zum Reinigen der Kunststoffabfälle vorhanden und es ist zweckmäßig, die Kunststoffabfälle feucht, insbesondere mit einem Feuchtigkeitsgehalt bis etwa 30 Gew.-%, wobei überschüssige Feuchtigkeit nur durch Rütteln od.dgl. entfernt worden ist, weiterzuverwenden, da sich diese Feuchtigkeit beim Autoklavieren positiv auf den Wärmetransport in das Innere der Gebinde auswirkt. Derartiges Material hat im allgemeinen eine Schüttdichte in der Größenordnung von 200 kg/m³.

Da die Kunststoffabfälle aus Siedlungs- und/oder Industrieabfällen im allgemeinen sehr inhomogen sind und im geschredderten Zustand u.a. Fasern, Folienschnipsel und stückige Teilchen enthalten, werden die Kunststoffabfälle vorzugsweise zunächst vorzerkleinert. Dies kann mittels Schneidmühlen o.dgl. und insbesondere mit dem Ziel geschehen, die Kunststoffabfälle zu im wesentlichen sich verfilzenden Teilchen, etwa Schnipsel oder faserartiges Material, mit einem möglichst großen Verhältnis von Länge zu Breite und Dicke vorzumahlen.

Die Kunststoffabfälle können zu zusammenhaltenden Gebinden verpreßt und/oder verklebt werden, wobei das Vormahlen insbesondere das Verpressen erleichtern soll.

Das Verpressen kann auf Müll- oder Strohpressen o.dgl. zu Gebinden in Form von großen Ballen erfolgen. Das Verpressen kann auch auf entsprechenden Pressen zu eigenstabilen, quader- oder eierförmigen Briketts, die entsprechend ihrer Formgebung stapelbar sind oder als Schüttgut von Körben o.dgl aufgenommen werden. Das Verpressen kann mit anlieferungsfeuchten Kunststoffabfällen (bis ca. 30 Gew.-% Feuchte) oder gegegebenenfalls mit vorgetrocknetem Material (kleiner 20 Gew.-% Feuchte) vorgenommen werden. Abgesehen davon ist die Verwendung von anlieferungsfeuchtem bzw. vorgetrocknetem Material abhängig von der Feinheit der Kunststoffteilchen und vom verwendeten Preßgerät.

Die einzelnen Gebinde aus verpreßten Kunststoffabfällen zeigen im allgemeinen eine beträchtliche Elastizität, die bewirkt, daß sich die Gebinde nach dem Verlassen der Presse wieder stark ausdehnen und eine relativ unregelmäßige Form annehmen. Gegebenenfalls ist es hierbei zweckmäßig, sie durch ein Mittel wie ein Netz, Bänder, Seile o.dgl. zusätzlich gegen Auseinanderfallen zu sichern. Insbesondere bei Ballen kann dies zweckmäßig sein. Stattdessen kann aber eine unterstützende Verklebung etwa mit einem organischen Kleber vorgenommen werden.

Durch das Verpressen lassen sich aus den Kunststoffabfällen kompakte, zusammenhaltende Gebinde mit einem hohen Wasseraufnahmevermögen, d.h. mit einer Vielzahl von stark wassersaugenden Poren herstellen.

Es lassen sich auch Gebinde aus den Kunststoffabfällen durch Zugabe eines Klebers erzeugen. Jedoch ist bei Verwendung eines organischen Klebers im allgemeinen ein relativ trockenes Ausgangsmaterial notwendig, so daß wegen des zusätzlichen Klebers und der eventuell notwendigen Trocknung ein Verpressen bevorzugt wird. Bei Verwendung eines anorganischen Klebemittel, etwa Gips, muß man das Aushärten abwarten, so daß auch dies im allgemeinen in bezug auf das Verpressen weniger vorteilhaft ist.

Das Verkleben ist hierbei derart vorzunehmen, daß sich ebenfalls kompakte, zusammenhaltende Gebinde mit einem hohen Wasseraufnahmevermögen, d.h. mit einer Vielzahl von stark wassersaugenden Poren ergeben.

Die Gebinde können aber auch dadurch gebildet werden, daß die vorzerkleinerten Kunststoffabfälle in Aufnahmebehälter etwa von Form von Körben, löchrigen Trögen o.dgl. als lose Schüttung gefüllt und gegebenenfalls mit einer genügenden Auflast versehen werden, die die Kunststoffteilchen soweit zusammendrückt, daß sich eine Vielzahl von stark wassersaugenden, d.h. genügend engen Poren herausbildet, so daß das so gebildete, zusammengehaltene Gebinde ein hohes Masseraufnahmevermögen und einen geringen Luftinhalt, der sich beim späteren Autoklavieren entsprechend ausdehnt, aufweist. Wenn der Autoklav vor dem Autoklavieren jedoch evakuiert wird, kann man auch auf die Auflast verzichten, da dann das aus dem Wasserdampf kondensierte Wasser überall hin dringen und den Kunststoff entsprechend erwärmen kann.

Der gebindemäßig eingesetzte Kunststoff kann eine Dichte von etwa 150 bis 600 kg/m³, je nach Einsatz in loser Schüttung oder Kompaktierung aufweisen. So kann man eine lose Schüttung von ca. 150 kg/m³ (trocken), eine durch Auflast zu etwa 350 kg/m³ zusammengedrückten Schüttung oder zu ca. 500 kg/m³ verballte Gebinde einsetzen.

Ein Trennhilfsmittel etwa in Form von Silikonöl oder einer Kraftpapiereinlage o.dgl. für den Aufnahmebehälter ist zweckmäßig.

Die Gebinde werden in einen Autoklaven eingeführt. Je nach Art des Gebindes werden diese beispielsweise auf palettenartige Träger o.dgl. eventuell unter lagenweiser Anordnung von Zwischengittern o.dgl. gestapelt oder von Aufnahmebehältern etwa in Form von Körben, löchrigen Trögen o.dgl. aufgenommen, so daß ihre Oberflächen möglichst für einen Zutritt von Wasserdampf zugänglich sind. Gegebenenfalls können zwischen den Trägern bzw. Aufnahmebehältern und den Gebinden Trennhilfsmittel angeordnet sein. Hierbei kann es sich um gegebenenfalls öl- oder wachsgebundene staubförmige Trennhilfsmittel, Silikonöl, Kraftpapierlagen o.dgl. handeln.

Gegebenenfalls werden die im Autoklaven befindlichen Gebinde zunächst mit Wasserdampf gespült und/oder einer Evakuierung unterzogen. Je größer die Gebinde bzw. je lockerer die Schüttung ist, desto wichtiger ist dies für die Wirtschaftlichkeit.

Beim anschließenden Autoklavieren in Wasserdampfatmosphäre bei etwa 150 bis 220°C, vorzugsweise etwa 165 bis 190°C, bei Drücken beispielsweise zwischen 5 bis 16 bar kondensiert der Wasserdampf an der zunächst noch kalten Oberfläche der Gebinde und das dadurch gebildete Kondenswasser dringt aufgrund der Kapillarwirkung der stark wassersaugenden Poren der Gebinde und/oder durch Schwerkrafteinwirkung in letztere ein. Hierdurch erfolgt ein sehr schneller Wärmetransport über Diffusion von außen in das Innere der Gebinde. Durch diese Erwärmung wird bewirkt, daß die Kunststoffteilchen schmelzen und miteinander verschmelzen, und zwar auch im Inneren des Gebindes. Wenn dies geschieht, sacken die Gebinde teilweise in sich zusammen.

Zweckmäßigerweise sind Begrenzungen etwa in Form von Wannen o.dgl. im Autoklaven vorgesehen, die geschmolzenen Kunststoff auffangen können, wenn dieser nicht durch seinen Aufnahmebehälter o.dgl. bereits daran gehindert wird, wegzufließen oder abzutropfen. Hierbei sind die Aufnahme- oder Auffangbehälter mit schmalen öffnungen für einen Wasserablauf, die aber den Kunststoff zurückhalten, zu versehen, damit beim späteren Trocknen weniger Wasser entfernt werden muß.

Als Aufnahmebehälter eignen sich beispielsweise leicht konische, den Wasserdampfzutritt zum Kunststoff etwa über entsprechende öffnungen ermöglichende Behälter mit herausdrückbaren Boden oder abklappbaren Seitenwänden, um eine leichte Entnahme des aus geschmolzenem Kunststoff gebildeten blockförmigen Körpers zu gewährleisten.

Wegen des schnellen Wärmetransports benötigt man keine langen Haltezeiten des Autoklaven, sondern nur relativ kurze Haltezeiten in der Größenordnung von etwa einer halben Stunde oder auch wesentlich weniger, beispielsweise 10 min, nach dem Aufheizen des Autoklaven. Die zur Erwärmung und zum Aufschmelzen benötigte Zeit ist aber u.a. formatabhängig.

Autoklaven, wie sie in der Baustoffindustrie üblich sind, können große Mengen aufnehmen, so daß sich zusammen mit den notwendigen kurzen Autoklavierzeiten großen Mengen durchsetzen lassen.

Da sich die Gebinde unter der Wärmeeinwirkung im Autoklaven aufgrund der enthaltenen Luft zunächst stark ausdehnen, ist es ferner zweckmäßig, die Gebinde mit einer Auflast zu versehen. Hierdurch werden vorhandene Poren zusammengedrückt und die Kapillarität erhöht, so daß der Wärmetransport beschleunigt wird. Außerdem ergibt sich hierdurch eine dichtere Verschmelzung. Ein seitliches Zusammenhalten etwa durch Korb-, Trogwände oder die oben aufgeführten Mittel zum Zusammenhalten bzw. Stützen der Ballen während des Autoklavierens kann hierbei ebenfalls zweckmäßig sein. - Allerdings können die Gebinde auch freistehend autoklaviert werden.

Beim Herunterfahren des Autoklaven erfolgt eine Rückverdampfung des in den aus verschmolzenem Kunststoff bestehenden Körpern befindlichen Wassers und damit eine zusätzliche Trocknung, bis etwa 100°C erreicht sind. Die hierdurch erzeugte Verdampfungskälte führt zu einer schnellen Abkühlung der Körper, wodurch diese ihre Klebrigkeit und plastische Konsistenz verlieren. Das anschließende Auskühlen der Körper erfolgt ebenfalls relativ schnell. - Zweckmäßigerweise wird mittels Sattdampf autoklaviert, jedoch kann auch mit überhitztem Dampf autoklaviert werden, um beim Autoklavieren zusätzlich zu trocknen.

Durch das beim Autoklavieren erfolgende Umschmelzen erhält man Körper mit Dichten im Bereich von ca. 500 bis 750 kg/m³, insbesondere von 600 bis 700 kg/m³. Die so erhaltenen, relativ dichten, d.h. wenig Zwischenräume aufweisenden Körper können etwa zum Abkühlen zwischengelagert und gegebenfalls als solche mit ihrem relativ geringen Volumen im Vergleich zu gemahlenem Pulver zu einem Verbraucher transportiert werden.

Die durch Autoklavieren erhaltenen Körper aus geschmolzenen und miteinander verschmolzenen Kunststoffteilchen zeichnen sich dadurch aus, daß sie relativ leicht sind und eine außerordentlich gute Wärmedämmung und hohe Festigkeit aufweisen. Dementsprechend können hieraus Formkörper auf entsprechendes Format geschnitten werden, die als solche für entsprechende Zwecke einsetzbar sind.

Insbesondere werden diese Körper jedoch - gegebenenfalls zusammen mit den Abfällen von den Formkörpern - zu Kornfraktionen durch Schneiden und Mahlen verarbeitet, die zur Weiterverwendung in stofflicher oder gegebenenfalls auch in verbrennungstechnischer Hinsicht geeignet sind. Insbesondere nach dem Schneiden kann eventuell ein Trocken etwa mit Warmluft bis zu einem geeigneten Feuchtigkeitsgrad für das nachfolgende Mahlen vorgenommen werden. Gegebenenfalls kann aber auch der geschmolzene Kunststoff als ganzer Körper, wie er nach dem Autoklavieren erhalten wird, getrocknet werden.

So läßt sich hieraus grobkörniges Material beispielsweise mit einem kubischen, splittrigen oder Rundkorn herstellen, dessen Körnung vom Einsatzzweck abhängig ist, das ein Schüttgewicht im Bereich von etwa 300 bis 330 kg/m³ (einschließlich Feuchte) haben kann. So ist beispielsweise eine Körnung bis 32 mm als Leichtzuschlag für Beton (etwa Betonfertigteile) geeignet. Körnungen von 8 mm, 4 mm, 2 mm etc. mit entsprechend breitem oder schmalem Kornband oder auch Mehl eignen sich als Zuschläge zu speziellen Putzen, Estrichen, Mauermörteln, Spachtelmassen, Untertagebaustoffen wie Dammbaustoffen oder Hinterfüllbaustoffen, Rohmischungen zur Herstellung verschiedenster Mauerwerksteine, u.dgl., die auf diese Weise mit Polymergranulaten modifiziert werden. Vorteilhaft ist im übrigen, daß beim Mahlen kein Feinstanteil anfällt, wenn das Material nicht auf eine entsprechend geringe Korngröße aufgemahlen wird. So kann eine Feinmahlung auf ein Schüttgewicht von etwa 20 bis 30 kg/m³ erfolgen.

So sind in dem beigefügten Diagramm, in dem der Siebdurchgang in % gegenüber der Prüfkorngröße in mm aufgetragen ist, zwei Sieblinien für ein feines und gröberes Pulver, die durch Mahlen des beim Autoklavieren erschmolzenen Kunststoffs erhalten wurden, dargestellt.

Trennhilfsmittel in Form von Kraftpapier o.dgl. können gegebenenfalls ebenso wie Mittel zum Zusammenhalten bzw. Stützen der Ballen mit vermahlen werden und stellen dann verlorene Mittel dar.

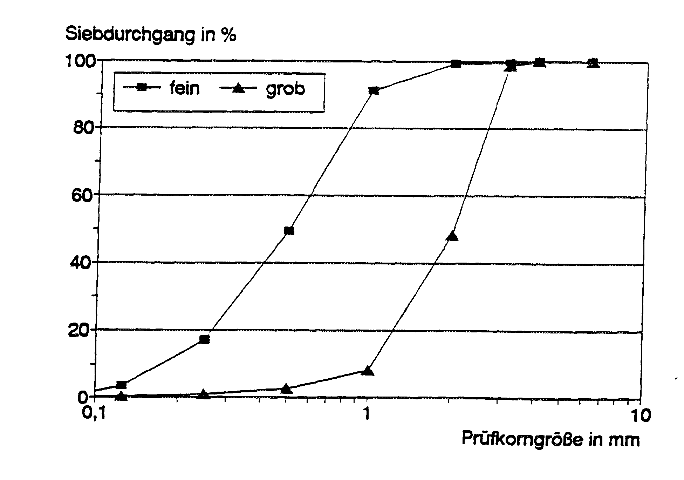

## Patentansprüche

1. Verfahren zum Aufarbeiten von Kunststoffabfällen, bei dem die in einen Behälter gefüllten Kunststoffabfälle als zusammenhaltende, poröse Gebinde mit hohem Wasseraufnahmevermögen in Wasserdampfatmosphäre bei etwa 150 bis 220°C, vorzugsweise 165 bis 190°C, autoklaviert und hierdurch miteinander verschmolzen, am Ende des Autoklaviervorgangs die entstandenen Körper aus verschmolzenem Kunststoff durch Rückverdampfung des darin enthaltenen Wassers zumindest teilweise getrocknet und abgekühlt werden.

2. Verfahren nach Anspruch 1, dadurch gekennzeichnet, daß nicht sortenreine Kunststoffabfälle eingesetzt werden.

3. Verfahren nach Anspruch 1, dadurch gekennzeichnet, daß sortenreine Kunststoffabfälle eingesetzt werden.

4. Verfahren nach einem der Ansprüche 1 bis 3, dadurch gekennzeichnet, daß die Kunststoffabfälle zunächst vorzerkleinert werden.

5. Verfahren nach Anspruch 4, dadurch gekennzeichnet, daß die Kunststoffabfälle im wesentlichen zu sich verfilzenden Teilchen mit einem möglichst großen Verhältnis von Länge zu Breite und Dicke zerkleinert werden.

6. Verfahren nach einem der Ansprüche 1 bis 5, dadurch gekennzeichnet, daß Kunststoffabfälle mit einem Feuchtigkeitsgehalt bis etwa 30 % eingesetzt werden.

7. Verfahren nach einem der Ansprüche 1 bis 6, dadurch gekennzeichnet, daß Kunststoffabfälle mit einer Dichte von etwa 150 bis 600 kg/cm³ eingesetzt werden.

8. Verfahren nach einem der Ansprüche 1 bis 7, dadurch gekennzeichnet, daß die Kunststoffabfälle zu Gebinden kompaktiert, insbesondere verpreßt werden.

9. Verfahren nach einem der Ansprüche 1 bis 7, dadurch gekennzeichnet, daß die Kunststoffabfälle zu Gebinden verklebt werden.

10. Verfahren nach Anspruch 9, dadurch gekennzeichnet, daß die Kunststoffabfälle mit einem organische Klebemittel verklebt werden.

11. Verfahren nach einem der Ansprüche 1 bis 7, dadurch gekennzeichnet, daß Kunststoffabfälle in loser Schüttung von Aufnahmebehältern aufgenommen und dann mit einer Auflast versehen eingesetzt werden.

12. Verfahren nach einem der Ansprüche 1 bis 10, dadurch gekennzeichnet, daß die Kunststoffabfälle zu Gebinden in Form von Ballen, die gegebenenfalls durch verlorene oder nicht verlorene Mittel zusammengehalten und/oder gestützt werden, geformt werden.

13. Verfahren nach Anspruch 12, dadurch gekennzeichnet, daß als Gebinde mit vorkompaktierten Kunststoffabfällen gefüllte Aufnahmebehälter eingesetzt werden, wobei die Aufnahmebehälter einen ausreichenden Zutritt von Wasserdampf zu den Kunststoffabfällen ermöglichen.

14. Verfahren nach einem der Ansprüche 1 bis 13, dadurch gekennzeichnet, daß die Kunststoffabfälle zu Gebinden in Form von stapelbaren Formkörpern, die gegebenenfalls durch verlorene oder nicht verlorene Mittel zusammengehalten und/oder gestützt werden, geformt werden.

15. Verfahren nach einem der Ansprüche 1 bis 14, dadurch gekennzeichnet, daß die Gebinde vor dem Autoklavieren dampfgespült werden.

16. Verfahren nach einem der Ansprüche 1 bis 15, dadurch gekennzeichnet, daß die Gebinde vor dem Autoklavieren evakuiert werden.

17. Verfahren nach einem der Ansprüche 1 bis 16, dadurch gekennzeichnet, daß die Gebinde unter Auflast autoklaviert werden.

18. Verfahren nach einem der Ansprüche 1 bis 17, dadurch gekennzeichnet, daß Einrichtungen, die die Gebinde während des Autoklavierens aufnehmen, mit einem Trennhilfsmittel versehen werden.

19. Verfahren nach einem der Ansprüche 1 bis 18, dadurch gekennzeichnet, daß die Kunststoffabfälle zu Körpern mit einer Dichte von etwa 500 bis 750 kg/m³, insbesondere etwa 600 bis 700 kg/m³, durch Autoklavieren verschmolzen werden.

20. Verfahren nach einem der Ansprüche 1 bis 19, dadurch gekennzeichnet, daß die beim Autoklavieren entstandenen Körper aus geschmolzenem Kunststoff zu Formkörpern geschnitten oder zu körnigem oder mehlartigem Material zerkleinert werden.

21. Verfahren nach einem der Ansprüche 1 bis 20, dadurch gekennzeichnet, daß die beim Autoklavieren entstandenen Körper einer Grobzerkleinerung zu einem Schüttgewicht von etwa 300 bis 330 kg/m³ unterworfen werden.

22. Verfahren nach einem der Ansprüche 1 bis 21, dadurch gekennzeichnet, daß die beim Autoklavieren entstandenen Körper einer Feinmahlung zu einem Schüttgewicht von etwa 20 bis 30 kg/m³ unterworfen werden.

## Claims

1. Method for processing plastic waste, in which the plastic waste, filled into a container as a cohesive, porous bundle with a high water-absorption capacity is autoclaved in a steam atmosphere at about 150 to 220 °C, preferably 165 to 190 °C, and by this melted, and at the end of the autoclave operation the bodies of molten plastic formed are at least partly dried and cooled by reboiling of the water contained in them.

2. Method according to Claim 1, characterized in that plastic waste of non-pure types is used.

3. Method according to Claim 1, characterized in that plastic waste of a pure type is used.

4. Method according to one of Claims 1 to 3, characterized in that the plastic waste is first precrushed.

5. Method according to Claim 4, characterized in that the plastic waste is essentially crushed into matting particles with a greatest possible length to width and thickness ratio.

6. Method according to one of Claims 1 to 5, characterized in that plastic waste with a moisture content up to about 30% is used.

7. Method according to one of Claims 1 to 6, characterized in that plastic waste with a specific gravity of about 150 to 600 kg/cm³ is used.

8. Method according to one of Claims 1 to 7, characterized in that the plastic waste is compacted, in particular is compressed, into bundles.

9. Method according to one of Claims 1 to 7, characterized in that the plastic waste is bonded into bundles.

10. Method according to Claim 9, characterized in that the plastic waste is bonded with an organic bonding agent.

11. Method according to one of Claims 1 to 7, characterized in that plastic waste in loose bulk is taken from holding containers and is then used, provided with a top load.

12. Method according to one of Claims 1 to 10, characterized in that plastic waste is formed into bundles in the shape of balls which, in certain cases, are held together and/or supported by lost or non-lost agents.

13. Method according to Claim 12, characterized in that holding containers filled with pre-compacted plastic waste as a bundle are used, the holding containers making possible an adequate entry of steam to the plastic waste.

14. Method according to one of Claims 1 to 13, characterized in that the plastic waste is formed into bundles in the form of stackable moulded bodies which, in a given case, are held together and/or supported by lost or non-lost agents.

15. Method according to one of Claims 1 to 14, characterized in that the bundle is steam-rinsed before autoclaving.

16. Method according to one of Claims 1 to 15, characterized in that the bundle is evacuated before autoclaving.

17. Method according to one of Claims 1 to 16, characterized in that the bundle is autoclaved with a top load.

18. Method according to one of Claims 1 to 17, characterized in that mechanisms which take up the bundle during autoclaving are fitted with a secondary release agent.

19. Method according to one of Claims 1 to 18, characterized in that the plastic waste is melted by autoclaving into bodies with a specific gravity of about 500 to 750 kg/m³, especially about 600 to 700 kg/m³.

20. Method according to one of Claims 1 to 19, characterized in that the bodies formed during autoclaving are cut up from melted plastics into moulded bodies or crushed into granular or flour-like material.

21. Method according to one of Claims 1 to 20, characterized in that the bodies formed during autoclaving are subjected to a coarse crushing to a bulk weight of about 300 to 330 kg/m³.

22. Method according to one of Claims 1 to 21, characterized in that the bodies formed during autoclaving are subjected to a pulverization into a bulk weight of about 20 to 30 kg/m³.

## Revendications

1. Procédé de retraitement de déchets en matières plastiques, dans lequel les déchets en matières plastiques, remplis dans un récipient, sont autoclavés, et de ce fait, fondus, sous forme d'échevettes cohésives poreuses avec une grande capacité hygroscopique, dans une atmosphère de vapeur d'eau dont la température se situe dans une plage comprise entre 150°C et 220°C environ, de préférence entre 165°C et 190°C, et dans lequel, à la fin de l'autoclavage, les corps en matières plastiques fondues ainsi obtenus sont au moins partiellement séchés par revaporisation de l'eau qu'ils contiennent et, enfin, refroidis.

2. Procédé selon la revendication 1, caractérisé en ce que les déchets en matières plastiques utilisés ne sont pas du même type.

3. Procédé selon la revendication 1, caractérisé en ce que les déchets en matières plastiques utilisés sont tous du même type.

4. Procédé selon l'une quelconque des revendications 1 à 3, caractérisé en ce que les déchets en matières plastiques sont au préalable broyés.

5. Procédé selon la revendication 4, caractérisé en ce que les déchets en matières plastiques sont broyés de façon à constituer essentiellement des particules produisant un effet de feutrage, avec un rapport maximal entre, d'une part, leur longueur et, d'autre part, leurs largeur et épaisseur.

6. Procédé selon l'une quelconque des revendications 1 à 5, caractérisé en ce que les déchets en matières plastiques utilisés présentent un taux d'humidité allant jusqu'à 30 % environ.

7. Procédé selon l'une quelconque des revendications 1 à 6, caractérisé en ce que les déchets en matières plastiques utilisés présentent une masse volumique comprise dans une plage allant de 150 à 600 kg/m³ environ.

8. Procédé selon l'une quelconque des revendications 1 à 7, caractérisé en ce que les déchets en matières plastiques sont compactés, en particulier pressés, pour constituer des échevettes.

9. Procédé selon l'une quelconque des revendications 1 a 7, caractérisé en ce que les déchets en matières plastiques sont encollés pour constituer des échevettes.

10. Procédé selon la revendication 9, caractérisé en ce que les déchets en matières plastiques sont encollés avec une colle organique.

11. Procédé selon l'une quelconque des revendications 1 à 7, caractérisé en ce que les déchets en matières plastiques utilisés sont reçus en vrac dans les récipients, puis placés sous charge.

12. Procédé selon l'une quelconque des revendications 1 à 10, caractérisé en ce que les déchets en matières plastiques sont moulés pour constituer des échevettes en forme de boules qui sont éventuellement maintenues cohésives par des moyens récupérables ou non récupérables.

13. Procédé selon la revendication 12, caractérisé en ce que les échevettes utilisées sont des récipients remplis de déchets en matières plastiques compactés au préalable, lesdits récipients permettant d'introduire une quantité suffisante de vapeur d'eau dans les déchets en matières plastiques.

14. Procédé selon l'une quelconque des revendications 1 à 13, caractérisé en ce que les déchets en matières plastiques sont moulés pour constituer des échevettes en forme d'objets pouvant être empilés qui sont éventuellement maintenus cohésifs par des moyens récupérables ou non récupérables.

15. Procédé selon l'une quelconque des revendications 1 à 14, caractérisé en ce que les échevettes sont lavées à la vapeur avant l'autoclavage.

16. Procédé selon l'une quelconque des revendications 1 à 15, caractérisé en ce que les échevettes sont mises sous vide avant l'autoclavage.

17. Procédé selon l'une quelconque des revendications 1 à 16, caractérisé en ce que les échevettes sont autoclavées sous charge.

18. Procédé selon l'une quelconque des revendications 1 à 17, caractérisé en ce que les installations utilisées pour recevoir les échevettes pendant l'autoclavage sont équipées de moyens de démoulage.

19. Procédé selon l'une quelconque des revendications 1 à 18, caractérisé en ce que les déchets en matières plastiques sont fondus par autoclavage pour constituer des corps d'une masse volumique comprise dans une plage allant de 500 à 700 kg/m³ environ, en particulier entre 600 et 700 kg/m³.

20. Procédé selon l'une quelconque des revendications 1 à 19, caractérisé en ce que les corps en matières plastiques fondues obtenus par autoclavage sont découpés pour constituer des objets moulés ou broyés pour constituer une matière granuleuse ou pulvérulente.

21. Procédé selon l'une quelconque des revendications 1 à 20, caractérisé en ce que les corps obtenus par autoclavage sont soumis à un broyage grossier pour obtenir une masse volumique en vrac comprise dans une plage allant de 300 à 330 kg/m³.

22. Procédé selon l'une quelconque des revendications 1 à 21, caractérisé en ce que les corps obtenus par autoclavage sont soumis à un broyage fin pour obtenir une masse volumique en vrac comprise dans une plage allant de 20 kg à 30 kg/m³.
